Europäisches Patentamt

European Patent Office

Office européen des brevets

(19)

(11) Publication number: **0 176 265**
**A1**

(12)

# EUROPEAN PATENT APPLICATION

(21) Application number: 85306174.5

(22) Date of filing: 30.08.85

(51) Int. Cl.⁴: **G 02 B 26/10**

(30) Priority: 04.09.84 US 647281

(43) Date of publication of application:
02.04.86 Bulletin 86/14

(84) Designated Contracting States:
DE FR GB IT

(71) Applicant: XEROX CORPORATION
Xerox Square - 020
Rochester New York 14644(US)

(72) Inventor: Brueggemann, Harry P.
980 Sherwood Road
San Marino California 91180(US)

(74) Representative: Weatherald, Keith Baynes et al,
European Patent Attorney Rank Xerox Limited Patent
Department 338 Euston Road
London NW1 3BH(GB)

(54) Optical scanning system.

(57) A rotary prism (12) scanner for correcting wobble and
field curvature by double reflection of a finite conjugate light
beam (RAY 1) from a pair of fixed mirrors (18, 20) having
optical power provided by aspheric surfaces. The aspheric
mirrors (18, 20) provide the scan and focus functions of
conventional f-Oscan lens optics, and hence such f-Oscan
lens optics can be eliminated from the scanner, thereby
providing a scanner that utilizes a finite conjugate light beam
and only mirrors to achieve a scan which is corrected for
wobble and field curvature.

EP 0 176 265 A1

FIG. 1

Many modern day raster scanning optical image systems utilize a rotary prismatic scanner, which by the rotational movement thereof causes the reflected light of an incident, collimated light beam to revolve about an axis near the center of rotation of the prism. Such scanning systems often suffer from the effects of wobble, introduced into the system by inaccuracies in the bearings supporting the prism, and inaccuracies in the grinding and positioning of the actual facets on the faces of the prism. The wobble effects cause an uneven raster scan, which produces irregular locations of the output scan lines whether utilized in an input or output fashion.

It has been proposed that wobble be cancelled by double reflection from the facets of a rotary prism, such facets being in parallel with the axis of rotation, see US-A-3,897,132. After a light beam normally incident on a facet is reflected by the facet, the light beam is returned to the same facet, by an arrangement of mirrors, for a second reflection. If there is an even number of mirror reflections between facet reflections, wobble introduced at the first facet reflection is cancelled by the second facet reflection. However, in such a system with facets parallel with the axis of rotation, that is, a zero draft angle prism, bow effects, defined as a deviation of the scan line from a straight line, are inevitable. If the embodiment of the cited U. S. Patent is analyzed, it can be shown that wobble is well corrected over the scan but bow is excessive, causing a displacement of at least 18 mm at the end of a 225 mm scan line.

The present invention provides a scanner using a rotary prism which is as claimed in the appended claims.

The present invention will now be described by way of example with reference to the accompanying drawings, in which:

Figure 1 is a cross-scan plane view of a scanning system of the present invention having wobble and bow correction;

Figure 2 is a scan plane view of the system of Figure 1;

Figure 3 is a cross-scan plane view of a scanning system of the present invention having wobble, bow and field curvature correction;

Figure 4 is a cross-scan plane view of the system of Figure 3 with partial mirror sections shown, and

Figure 5 is a scan plan view of the system of Figure 3.

It is proposed that the function of the f-θ scan lens optics be provided by putting optical power on the flat mirrors that provide for the second reflection from the same facet of the draft angle polygon (prism). The wobble correction would still be maintained and bow would be corrected by the three design variables previously mentioned. Anyone experienced in designing a scanner could easily make the small adjustments to the variables to obtain a bow-free scan line. However, development of this concept, by arbitrarily putting spherical curvature on the flat mirrors, quickly reveals a problem: severe astigmatism. This is because of the fact that the fixed mirrors are at an angle to the beam being reflected. The power of a curved mirror is different in orthogonal directions when the beam is at an angle to the mirror, instead of being at near-normal angles of incidence. By balancing the tilt of the two mirrors against their curvatures, it is possible to eliminate astigmatism at the center-of-scan position, but astigmatism is still severe at other scan positions. Allowing the mirrors to become toroids instead of spheres, and optimizing with this extra design freedom, yields an insignificant improvement in the off-center astigmatism.

Astigmatism can be virtually eliminated by utilizing, instead of flat mirrors, mirrors with optical power, that is, mirrors with curved active surfaces that are rotationally symmetric but not spherical, that is, aspheric surfaces which have the form:

$$Z = \frac{ch^2}{1 + [1 - (1 + k) c^2 h^2]^{1/2}} + Ah^4 + Bh^6 + Ch^8 + Dh^{10} \qquad (1)$$

where, in rectangular coordinates

$Z$ = the sag of the surface

$h^2 = x^2 + y^2$

$c$ = the curvature at the pole of the surface, that is, the reciprocal of the radius of the curve at the apex

$k$ = the conic coefficient $(K = -e^2)$:

$k = 0$ for a sphere

$k > 0$ for oblate spheroid

0>k>-1 for ellipsoid with major axis on the optical axis

k = -1 for paraboloid

k<-1 for hyperboloid

A, B, C, D = $4^{th}$, $6^{th}$, $8^{th}$ and $10^{10th}$ order deformation terms, respectively, which can be zero for this application but could be other than zero if additional curvature is required for system refinement or tweaking.

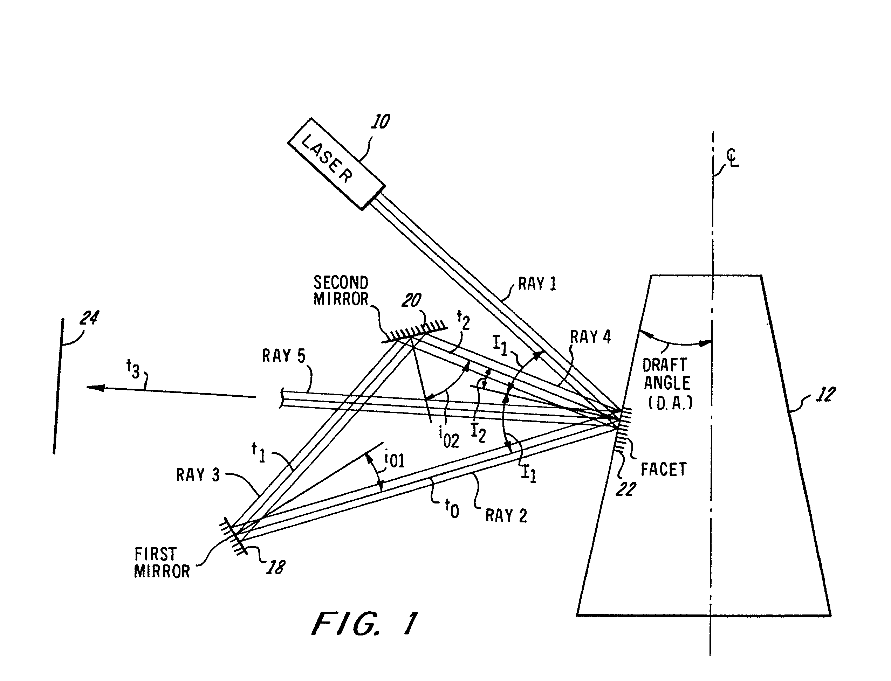

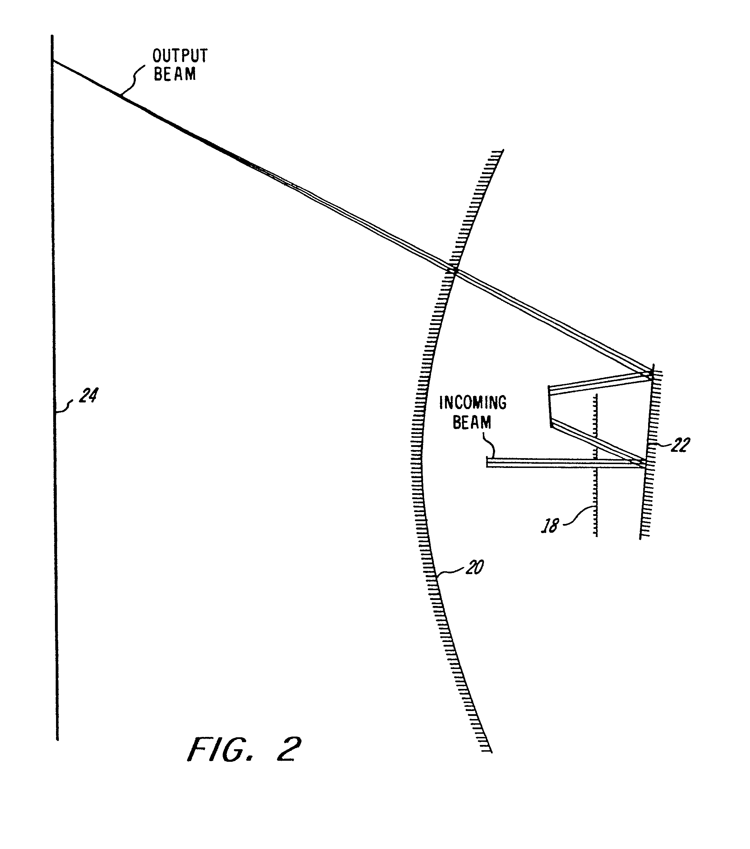

An example of the scanning system disclosed is seen in Figure 1, which is a sectional view through the center of scan, and Figure 2 which is a cross-scan view. Rotating polygon 12 is rotated, at a constant angular speed, about a line denoted as center line (C/L) by a conventional drive motor arrangement (not shown). This polygon could have any number of facets, while for this application, the rotating polygon has 20 distinct facets. Rather than having the plane of each facet parallel to the axis of rotation, or the center line, as in conventional scanning systems using zero draft angle polygons, the polygon facets are tilted toward the center line at an angle denoted as the "draft angle" (D.A.). Impinging upon one facet 22 of the rotating polygon 12 is infinite conjugate light (collimated light) from a light source such as, for example, a laser 10. Although polygon 12 is shown as having externally reflecting facets, a polygon having internally reflecting facets could be used. No optics are shown between laser 10 and facet 22 for ease of illustration, but certain optics could be necessary depending upon the type of laser chosen. Ray 1 coming from the laser 10 is coplanar with the center line, and is directed to facet 22 of rotating polygon 12. The light strikes the polygon and is reflected, with the angle of reflection equalling the angle of incidence. The angle I1 is defined in Figure 1 as the angle between laser ray 1 and the normal to the surface of facet 22.

For this definition of I1, the normal to the facet 22 is taken to be in the plane of Figure 1, and is coplanar with the centerline and with ray 1. This position of the normal is defined as the center of scan. After the light is reflected by facet 22, it travels to first aspheric mirror surface 18. Thus, ray 2 is ray 1 reflected by facet 22. Whereas ray 1 is stationary in space regardless of the position of the polygon 12, ray 2 rotates as the polygon rotates. Mirror surface 18 must be large enough in the direction perpendicular to the plane of Figure 1 so that ray 2 strikes it at all times during the active scan of facet 22. Ray 2 is reflected from mirror surface 18, and is shown as ray 3. From the surface 18 the ray 3 travels to second aspheric mirror surface 20, from which it is reflected as ray 4, as seen in Figure 1. Since ray 3 is rotating at the same angular rate as ray 2, the aspheric mirror surface 20 must be even larger than surface 18 to reflect ray 3 during active scan, because surface 20 is optically further from the facet 22 than surface 18. Ray 4 now travels back to facet 22, still with the same angular rate it had after being reflected from facet 22 as ray 2. Since the facet 22 is rotating, and ray 4 is also moving in the same direction as the facet, facet 22 need not be as large as mirror surface 20. The spacing between mirrors 18 and 20, and facet 22, must be kept small so that the mirrors and facet do not become too large. One skilled in the art of designing underfilled facet scanners will know how to choose the correct values of the laser beam parameters, so that the mirrors and the poygon do not become too large.

Ray 4 has many angles of incidence with facet 22 during the scan, because it rotates as the polygon rotates. Only one of these angles is defined as $I_2$ in Figure 1, this is the angle between ray 4 and the normal to facet 22 in the plane of the paper as shown in Figure 1. After reflection again by facet 22, ray 4 becomes ray 5, which is the photosensitive surface scanning ray that is corrected for facet-to-facet wobble, and at the same time has no bow, and is virtually free of astigmatism.

The condition of freedom from astigmatism requires that a "focus" of each aspheric mirror surface be located at a stationary part of the beam. For the first fixed mirror 18, this point can be the point of first reflection from the facet 22, since the beam is stationary in space until after the first reflection. The first aspheric surface mirror 18 will form an image of the first reflection, this image is also stationary in space since the mirror 18 is stationary. This image is the other 'focus' of the first mirror 18, and is the focus of the second aspheric surface mirror 20.

In system usage, the aspheric surface mirror optics must meet the demand of reduced astigmatism and other demands, such as wobble correction, operation at "infinite conjugates", and the geometry of returning the beam after the first facet reflection, back to the facet for the second reflection at the correct angle of incidence. It is also desirable to have the first and second facet reflections occur at the same point on the facet at the center-of-scan, this minimizes the deleterious effect of facet curvature, if the facets are not manufactured to be exactly flat.

Referring further to Figure 1, algebra has been developed to specify the parameters of the cross-scan curvatures of both the first aspheric surface mirror 18 and the second aspheric surface mirror 20, in terms of the distance between the mirrors 18 and 20 and the active facet 22, the angle of incidence of the beam at each mirror, and the distance from the facet 22 to the photoreceptor or photosensitive surface 24 to be scanned. System performance constraints determine the relationship between the foregoing parameters. To correct for wobble and operate with an "infinite conjugate" input beam, that is, a perfectly collimated input beam, the following equations apply and must be satisfied:

$$C_{X1} = - \frac{t_2 \cos i_{01}}{2t_1 t_3} \tag{2}$$

$$C_{X2} = \frac{(t_1 + t_2) \cos i_{02}}{2t_1 (t_2 + t_3)} \tag{3}$$

where, referring again to Figure 1, $t_0$ is the distance between the active facet of the polygon and the first aspheric surface mirror, $t_1$ is the distance between the first and second aspheric surface mirrors, $t_2$ is the distance between the second aspheric surface mirror and the active facet of the polygon, and $t_3$ is the distance from the facet to the photosensitive surface. These distances are measured along the chief ray of the beam at the center-of-scan, and correspond to the rays 2, 3, 4 and 5. The angles $i_0$ are the angles of incidence at the fixed, aspheric surface mirrors, the subscript 1 and 2 identify mirrors 18 and 20, respectively. The curvatures $C_X$ are the curvatures of the aspheric surface mirrors in the cross-scan plane, again the numerical subscripts in equations (2) and (3) identify the mirror.

From the geometry of a triangle, it is clear that $(I_1 + I_2) + 2i_{01} +$

$2i_{02} = 180°$. To return the beam to the facet at the second reflection so that it is superimposed on the first reflection, the law of sines requires that:

$$\frac{\sin 2i_{01}}{t_2} = \frac{\sin 2i_{02}}{t_0} = \frac{\sin(I_1 + I_2)}{t_1} \qquad (4)$$

When all of these equations are satisfied, the parameters of each aspheric surface mirror can be established. These are taken as the radius of curvature at the apex of the mirror, r, and the eccentricity of the mirror, e. As before, numeric subscripts 1 and 2 are used to identify aspheric surface mirror 18 and 20, respectively. The mirror parameters are:

$$r_1 = \frac{\cos^3 i_{01}}{C_{X1}} \qquad (5)$$

$$r_2 = \frac{\cos^3 i_{02}}{C_{X2}} \qquad (6)$$

$$e_1^2 = \frac{\cos^4 i_{01} - 2(t_0 C_{X1}) \cos^3 i_{01} + (t_0 C_{X1})^2}{(t_0 C_{X1})^2} \qquad (7)$$

$$e_2^2 = \frac{\cos^4 i_{02} - 2(t_9 C_{X2}) \cos^3 i_{02} + (t_9 C_{X2})^2}{(t_9 C_{X2})^2} \qquad (8)$$

where $t_9$ is an intermediate parameter given by

$$t_9 = t_1 - \frac{r_1}{\cos i_{01} \left[ \cos i_{01} - e_1 \sqrt{\dfrac{- \sin^2 i_{01}}{e_1^2}} \right]} \cdot \qquad (9)$$

Eccentricity is used here instead of the k parameter of equation (1), because e is signed, which is lost in squaring. The "focus" that is closer to the mirror at the point of reflection is positive, the "focus" that is further away is negative.

The design parameters for a specific design of the system of Figures 1 and 2 are provided with the given parameters $I_1 = 30°$, $I_2 = 9.16°$, $t_2 = 25$ mm, $t_3 = 250$ mm, $i_{01} = 16.01212°$ and a polygon draft angle of 16.53 degrees. Solving the above equations simultaneously yields for the curvature of the first mirror 18 a value of $C_{X1} = -.04035745$, and for the second mirror 20 a value of $C_{X2} = 0.04867009$. The angle of incidence $i_{02}$ at the second mirror 20 is 54.40788°, the value of $t_0$ is 1.785027 inches, and of $t_1$ is 1.190862 inches. The parameters of the two optical power mirrors 18 and 20 are $r_1 = -22.005039$ inches and $r_2 = 4.0507155$ inches, $e_1 = -13.78910104$ and $e_2 = 2.11748621$.

These design parameters must be converted to a prescription, which can be put onto a computer and analyzed, or to have the computer draw a layout of the design. Commercial optical software is available for analysis or layouts; a person versed in the art of optical design will understand how to enter the prescription into the various kinds of commercial software. A specific prescription of the design given above is set forth in Table I. The specific prescription is in Code V, a software package offered by Optical Research Associates.

The design given above has bow, the ends of the scan being 4.57 mm lower than the center of scan. This can be greatly reduced by simply changing the three design parameters of the system such as by changing the alpha angles on surfaces 2, 11 and 27.

When a draft angle polygon scanner system with optical power mirrors as shown in Figure 1 is tested, it is found that it provides a scanning spot that is barely diffraction limited at 12 spots per mm, the residual aberrations being scanning field curvature and coma. Since astigmatism has been eliminated, it might be thought that field curvature is due only to the curvature of the Petzval surface. The Petzval curvature contribution of a mirror is the negative of the power of the mirror, since the index of refraction of a mirror is -1. The Petzval curvature of a system of mirrors is the sum of the Petzval contributions of each mirror. In a system of two mirrors the Petzval sum is zero if the mirrors have equal but opposite powers. But making the Petzval sum equal to zero does not correct field curvature in the scanning system of Figure 1. That is because the beam is reflected from the rotating polygon facet a a second time, after the last mirror with power. The only way to flatten the scanning field curvature is to have a large amount of Petzval curvature in the mirror system. The sense of the required Petzval curvature is that of a positive (concave) mirror.

Equations (2) and (3) show the values of the conic mirror curvatures required in the cross-scan plane, at the center-of-scan position, at the point where the beam is reflected from each mirror. It is seen that $C_{x1}$ must always be negative, because the equation for $C_{x1}$ has a minus sign before it, and all the parameters in the equation are positive. This negative mirror makes it impossible to get enough Petzval curvature to cancel the scanning field curvature.

Equations (2) and (3) were derived to satisfy two requirements - wobble correction and infinite conjugates. Wobble correction must be retained, therefore the requirement for infinite conjugates would be abandoned if scanning field curvature is to be eliminated or significantly reduced. This means that the beam (ray 1) is not collimated at the first reflection from the facet 22. The deviation from collimation is not large, being 10 or 20 minutes of arc, and can be provided by standard collection optics placed between laser 10 and polygon 12.

Abandoning the requirement of infinite conjugates means that $C_{x1}$ and $C_{x2}$ are not both dependent variables in the design. One of them can be an independent variable, then to satisfy the requirement for wobble correction, the other one becomes a dependent variable. Selecting $C_{x2}$ as the independent variable, then the equation defining $C_{x1}$ becomes:

$$C_{X1} = \frac{\cos i_{01}\left[(t_0 + t_1 + t_2)\cos i_{02} - 2(t_0 + t_1)(t_2 + t_3)C_{X2}\right]}{2t_0\left[(t_1 + t_2 + t_3)\cos i_{02} - 2t_1(t_2 + t_3)C_{X2}\right]} \quad (10)$$

Equation (10) and equations (5) through (9) are used to determine the configuration of two optical power aspheric mirrors 18 and 20 which will produce a wobble-corrected scan line, while ensuring that the second reflection will be superimposed on the first reflection, at the center of scan. Since the condition of infinite conjugates is no longer applicable, the position of the object point ahead of the first facet reflection must be known. This value, $t_5$, is given by the equation:

- 9 -

$$t_5 = \frac{t_0 t_3 \cos i_{02}}{2C_{x2} t_1(t_2+t_3) - (t_1+t_2)\cos i_{02}} \qquad (11)$$

By iteration between the equations given and software for optical analysis, an exemplary finite conjugate diffraction limited scanner design is obtainable for 12 spots per mm. In an exemplary system, the pyramid polygon has 16 facets, with an active scan length of 255.52 mm. The duty cycle of this scan length is 79%. The scan is not linear, the spot velocity is that of a beam rotating at a constant angular rate, writing on a flat surface 8.200389 inches from the pivot point of the beam, through angles from zero (center of scan) to 31.5312 degrees (end of scan). The equation of this simulation is h = 8.200389 tan$\alpha$ where $\alpha$ is the polygon rotation angle and h is the scanning spot distance from the center of scan position. The accuracy of this simulation is better than one millionth of a mm.

At the center-of-scan position of the exemplary finite conjugate scanner, all aberrations are corrected, and the spot is a perfect diffraction-limited spot. At the start (or end) of scan there is a small amount of coma and field curvature in the scan plane, but the ray error is no more than about one-twentieth of a wavelength of infrared light (800 nm). In the cross-scan plane ray errors are very small, better than one-fiftieth of a wavelength. For blue light (435.8 nm) the geometric aberrations do not change since the system consists only of mirrors, but these aberrations as a fraction of wavelength do change. But the overriding effect of changing wavelength is that for blue light the f/number is much larger, to obtain 12 spots per mm. Reducing the aperture to increase the f/number eliminates the rays which cause most of the aberrations. As a result, ray errors to blue light are less than one-fortieth of a wavelength at 12 spots per mm. If the aperture is not reduced, the system will operate at 24 spots per mm to blue light. At this high resolution, the ray errors are less than one-tenth wavelength, at the end of scan. Ray errors are less than one-sixteenth of the blue wavelength over most of the scan.

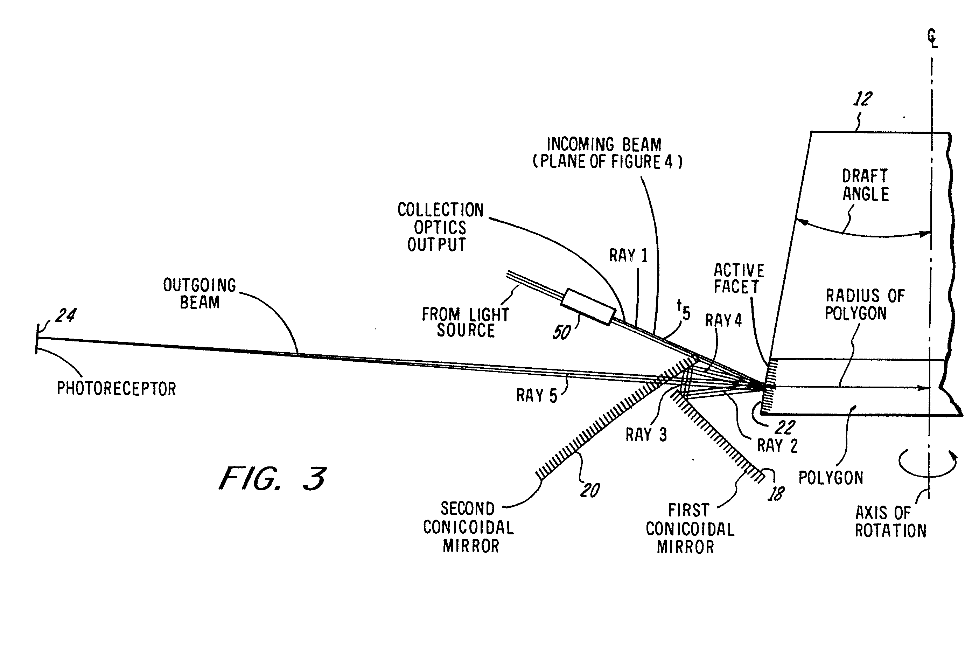

A cross-scan view of the exemplary finite conjugate diffraction-limited scanner having two conicoidal mirrors and a draft angle polygon, is shown in Figure 3. A collimated beam, such as from laser 10 of Figure 1, can be used, with that beam being decollimated by conventional collection optics 50, as shown in Figure 3 to provide ray 1. The collection optics is some optical means of gathering the output beam from some source, such as a diode laser, a helium-neon laser, a modulator, or an incandescent lamp, and changing it to the proper size and divergence angle for the scanning system. For example, the collection optics could be a specifically designed microscope objective, or a glass lens of the correct focal length with a plastic aspheric surface, such as made by Philips of Eindhoven, The Netherlands. For this invention, the collection optics causes the ray 1 of Figure 3 to appear to emanate from a point source located at a distance of 7.767 inches ahead of the polygon facet 22, that is, $t_5 = 7.767$ inches, when measured from the virtual point source.

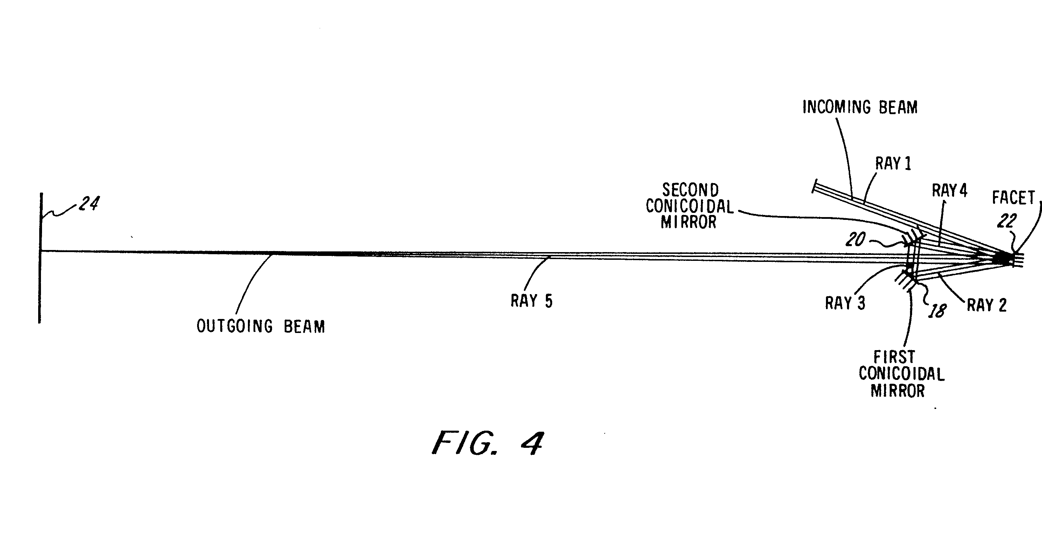

Continuing further with the exemplary system of Figure 3, the polygon 18 has a draft angle of 8.3 degrees, and the beam is incident on the facet at an angle of 15 degrees to the facet normal. The beam is reflected to the first mirror 18. This mirror is shown symmetrical about its own axis, but only a small portion is used during the scan, as shown in Figure 4. Returning to Figure 3, the beam is reflected from the first mirror 18 to the second mirror 20. This mirror is also shown symmetrical about its own axis, but again only a small portion is used. From the second mirror 20, the beam is reflected back to the facet 22. At the center of scan the beam strikes the facet the second time at the same place it was reflected the first time. After reflection from the facet the second time, the beam would pass between the two conicoidal mirrors, and is focused at the photoreceptor 24.

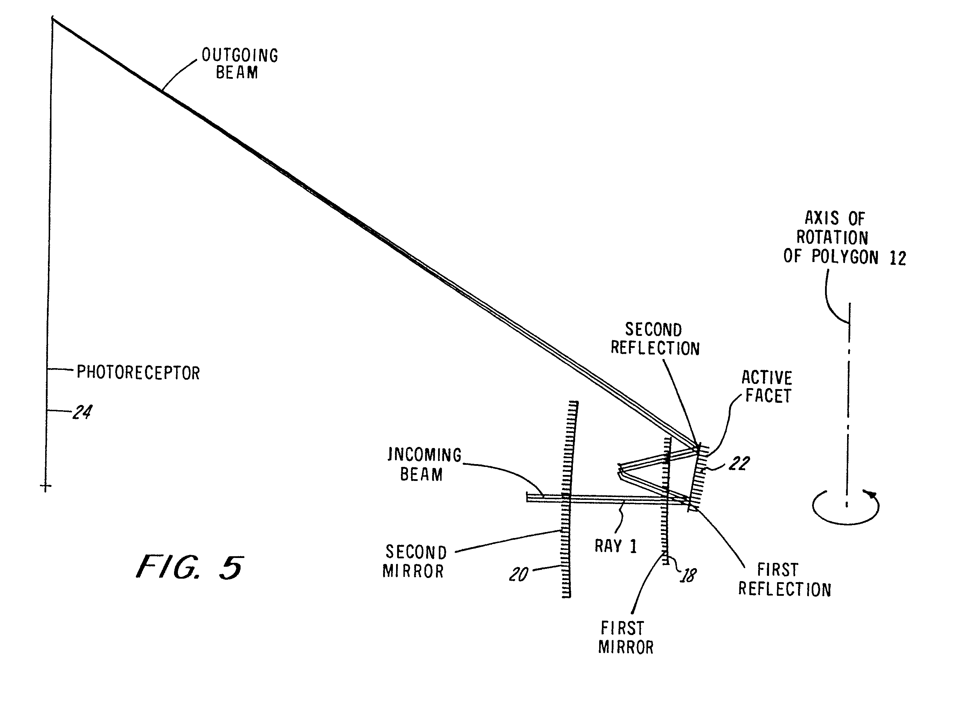

A scan plane view of the exemplary system, at the end of scan position, is shown in Figure 5. The reference plane for this view is the plane of the incoming beam, this plane is normal to the paper in Figure 4. All components seen in Figure 5 are seen as projected onto this plane. For example, the polygon radius is 38 mm in Figure 4, in Figure 5 it is the projection of 38 mm onto the reference plane. Since the plane of the polygon rotation is at an angle of 15 + 8.3 degrees to the reference plane, the radius of the polygon as seen in Figure 5 is 1.5 x cos (23.3) or 35 mm.

- 11 -

In Figure 5, the mirrors are shown as a section through their own axes, projected onto the reference plane. The actual points of reflection are not on these sections through their axes. The bends in the beam, which indicate reflection from the mirrors, occur at the actual points of reflection projected onto the reference plane.

The system has been adjusted so that the second reflection remains on the facet as long as the edge of the facet has not begun to move through the beam at the first reflection. This adjustment has the effect that each reflection is the same distance from the center-of-scan position. As the edge of the facet begins to pass through the beam at the first reflection, the beam begins to walk off the other edge of the facet at the second reflection. This adjustment is made by reducing the polygon radius.

A specific prescription for the design of the system of Figure 3-5 is set forth in Table II, once again in Code V.

In both Tables I and II, surfaces 6 and 22 correspond to facet 22 at the first and second reflections, respectively, and surfaces 13, 15, and 29 correspond respectively to mirror 18, mirror 20 and surface 24. Positions 1 through 5 of the Zoom Data of Tables I and II represent various angular positions of facet 22, and position 6 of the Zoom Data of Tables I and II gives the changes that occur in the respective systems at position 5 with 3 arc-minutes of wobble.

## TABLE I

### SURFACE DATA

| SURFACE # | CURVATURE | | THICKNESS | | GLASS | | STOP | TYPE |
|---|---|---|---|---|---|---|---|---|
| OBJECT SURFACE | 0.00000000 | | | | | | S | |
| 1 | 0.00000000 | | 1.500000 | | | | | |
| 2 | DECE | 0.000000 | 0.000000 | 30.000000 | 0.000000 | 0.000000 | | |
| | 0.00000000 | | 0.000000 | | | | | |
| 3 | DECE | 0.000000 | 0.000000 | 16.530000 | 0.000000 | 0.000000 | | |
| | 0.00000000 | | 0.950000 | | | | | |
| 4 | DECE | 0.000000 | 0.000000 | 0.000000 | 0.000000 | 0.000000 | | |
| | 0.00000000 | | -0.950000 | | | | | |
| 5 | DECE | 0.000000 | 0.000000 | -16.530000 | 0.000000 | 0.000000 | | |
| | 0.00000000 | | 0.000000 | | | | | |
| 6 | DECE | 0.000000 | 0.000000 | 0.000000 | 0.000000 | 0.000000 | | |
| | 0.00000000 | | 0.000000 | | REFL | | | |
| 7 | DECE | 0.000000 | 0.000000 | 0.000000 | 0.000000 | 0.000000 | | |
| | 0.00000000 | | 0.000000 | | | | | |
| 8 | DECE | 0.000000 | 0.000000 | 16.530000 | 0.000000 | 0.000000 | | |
| | 0.00000000 | | 0.950000 | | | | | |

TABLE I

## SURFACE DATA

| SURFACE # | CURVATURE | | THICKNESS | | GLASS | | STOP | TYPE |
|---|---|---|---|---|---|---|---|---|
| 9 | DECE | 0.000000 | 0.000000 | 0.000000 | 0.000000 | 0.000000 | | |
| | 0.00000000 | | -0.950000 | | | | | |
| 10 | DECE | 0.000000 | 0.000000 | -16.530000 | 0.000000 | 0.000000 | | — |
| | 0.00000000 | | 0.000000 | | | | | |
| 11 | DECE | 0.000000 | 0.000000 | 30.000000 | 0.000000 | 0.000000 | | |
| | 0.00000000 | | 0.000000 | | | | | |
| 12 | DECE | 0.000000 | 0.000000 | 14.865884 | 0.000000 | 0.000000 | | |
| | 0.00000000 | | -1.720609 | | | | | |
| 13 | -0.04544414 | | -1.487923 | | REFL | | | |
| | -190.13930750 | | | | | | | |
| 14 | DECE | 0.000000 | 0.000000 | 94.149846 | 0.000000 | 0.000000 | | |
| | 0.00000000 | | 1.299353 | | | | | |
| 15 | -0.24686997 | | 0.000000 | | REFL | | | |
| | -4.48374785 | | | | | | | |
| 16 | RETU | 2 | | | | | | |
| | 0.00000000 | | 0.000000 | | | | | |
| 17 | DECE | 0.000000 | 0.000000 | 90.000000 | 0.000000 | 0.000000 | | |
| | 0.00000000 | | 0.000000 | | | | | |
| 18 | DECE | 0.000000 | 0.000000 | 90.000000 | 0.000000 | 0.000000 | | |
| | 0.000000 | | 0.000000 | | | | | |

TABLE I

## SURFACE DATA

| SURFACE # | CURVATURE | | THICKNESS | | GLASS | | STOP | TYPE |
|---|---|---|---|---|---|---|---|---|
| 19 | DECE | 0.000000 | 0.000000 | 16.530000 | 0.000000 | 0.000000 | | |
| | 0.00000000 | | -0.950000 | | | | | |
| 20 | DECE | 0.000000 | 0.000000 | 0.000000 | 0.000000 | 0.000000 | | |
| | 0.00000000 | | 0.950000 | | | | | |
| 21 | DECE | 0.000000 | 0.000000 | -16.530000 | 0.000000 | 0.000000 | | |
| | 0.00000000 | | 0.000000 | | | | | |
| 22 | DECE | 0.000000 | 0.000000 | 0.000000 | 0.000000 | 0.000000 | | |
| | 0.00000000 | | 0.000000 | | REFL | | | |
| 23 | DECE | 0.000000 | 0.000000 | 0.000000 | 0.000000 | 0.000000 | | |
| | 0.00000000 | | 0.000000 | | | | | |
| 24 | DECE | 0.000000 | 0.000000 | 16.530000 | 0.000000 | 0.000000 | | |
| | 0.00000000 | | -0.950000 | | | | | |
| 25 | DECE | 0.000000 | 0.000000 | 0.000000 | 0.000000 | 0.000000 | | |
| | 0.00000000 | | 0.950000 | | | | | |
| 26 | DECE | 0.000000 | 0.000000 | -16.530000 | 0.000000 | 0.000000 | | |
| | 0.00000000 | | 0.000000 | | | | | |
| 27 | DECE | 0.000000 | 0.000000 | 9.160000 | 0.000000 | 0.000000 | | |
| | 0.00000000 | | 1.500000 | | | | | |
| 28 | 0.00000000 | | 8.500000 | | | | | |
| 29 | 0.00000000 | | 0.000000 | | P/R | | | |

## TABLE I

### SPECIFICATION DATA

| | |
|---|---|
| EPD | 0.07092 |
| DIM | I |
| WL | 800 |

### ZOOM DATA

| | POS 1 | POS 2 | POS 3 | POS 4 | POS 5 | POS 6 |
|---|---|---|---|---|---|---|
| BDE4 | 0.000000 | 1.812500 | 3.625000 | 5.437500 | 7.250000 | 7.250000 |
| BDE9 | 0.000000 | -1.812500 | -3.625000 | -5.437500 | -7.250000 | -7.250000 |
| BDE 20 | 0.000000 | -1.812500 | -3.625000 | -5.437500 | -7.250000 | -7.250000 |
| BDE 25 | 0.000000 | 1.812500 | 3.625000 | 5.437500 | 7.250000 | 7.250000 |
| ADE 6 | 0.000000 | 0.000000 | 0.000000 | 0.000000 | 0.000000 | 0.050000 |
| ADE 7 | 0.000000 | 0.000000 | 0.000000 | 0.000000 | 0.000000 | -0.050000 |
| ADE 22 | 0.000000 | 0.000000 | 0.000000 | 0.000000 | 0.000000 | 0.050000 |
| ADE 23 | 0.000000 | 0.000000 | 0.000000 | 0.000000 | 0.000000 | -0.050000 |

TABLE II

## SURFACE DATA

| SURFACE # | CURVATURE | | THICKNESS | | GLASS | | STOP | TYPE |
|---|---|---|---|---|---|---|---|---|
| OBJECT SURFACE | 0.00000000 | | 6.267464 | | | | S | |
| 1 | 0.00000000 | | 1.500000 | | | | | |
| 2 | DECE | 0.000000 | 0.000000 | 15.000000 | 0.000000 | 0.000000 | | |
| | 0.00000000 | | 0.000000 | | | | | |
| 3 | DECE | 0.000000 | 0.000000 | 8.300000 | 0.000000 | | | |
| | 0.00000000 | | 1.500000 | | | | | |
| 4 | DECE | 0.000000 | 0.000000 | 0.000000 | 0.000000 | 0.000000 | | |
| | 0.00000000 | | -1.500000 | | | | | |
| 5 | DECE | 0.000000 | 0.000000 | -8.300000 | 0.000000 | 0.000000 | | |
| | 0.00000000 | | 0.000000 | | | | | |
| 6 | DECE | 0.000000 | 0.000000 | 0.000000 | 0.000000 | 0.000000 | | |
| | 0.00000000 | | 0.000000 | | REFL | | | |
| 7 | DECE | 0.000000 | 0.000000 | 0.000000 | 0.000000 | 0.000000 | | |
| | 0.00000000 | | 0.000000 | | | | | |
| 8 | DECE | 0.000000 | 0.000000 | 8.300000 | 0.000000 | 0.000000 | | |
| | 0.00000000 | | 1.50000 | | | | | |
| 9 | DECE | 0.000000 | 0.000000 | 0.000000 | 0.000000 | 0.000000 | | |
| | 0.00000000 | | -1.500000 | | | | | |

TABLE II

## SURFACE DATA

| SURFACE # | CURVATURE | | THICKNESS | | GLASS | | STOP | TYPE |
|---|---|---|---|---|---|---|---|---|
| 10 | DECE | 0.000000 | 0.000000 | -8.300000 | 0.000000 | 0.000000 | | |
| | 0.00000000 | | 0.000000 | | | | | |
| 11 | DECE | 0.000000 | 0.000000 | 15.000000 | 0.000000 | 0.000000 | | |
| | 0.00000000 | | 0.000000 | | | | | |
| 12 | DECE | 0.000000 | 0.000000 | 38.902000 | 0.000000 | 0.000000 | | |
| | 0.00000000 | | -0.583213 | | | | | |
| 13 | 0.09285782 | | -0.654055 | | REFL | | | CONICOID |
| | -305.03317261 | | | | | | | |
| 14 | DECE | 0.000000 | 0.000000 | 81.815600 | 0.000000 | 0.000000 | | |
| | 0.00000000 | | 0.752692 | | | | | |
| 15 | -0.11353053 | | 0.000000 | | REFL | | | CONICOID |
| | -114.53850555 | | | | | | | |
| 16 | RETU | 2 | | | | | | |
| | 0.00000000 | | 0.000000 | | | | | |
| 17 | DECE | 0.000000 | 0.000000 | 90.000000 | 0.000000 | 0.000000 | | |
| | 0.00000000 | | 0.000000 | | | | | |
| 18 | DECE | 0.000000 | 0.000000 | 90.000000 | 0.000000 | 0.000000 | | |
| | 0.00000000 | | 0.000000 | | | | | |

# TABLE II

## SURFACE DATA

| SURFACE # | CURVATURE | | THICKNESS | | GLASS | | STOP | TYPE |
|---|---|---|---|---|---|---|---|---|
| 19 | DECE | 0.000000 | 0.000000 | 8.300000 | 0.000000 | 0.000000 | | |
|  | 0.00000000 | | -1.500000 | | | | | |
| 20 | DECE | 0.000000 | 0.000000 | 0.000000 | 0.000000 | 0.000000 | | |
|  | 0.00000000 | | 1.500000 | | | | | |
| 21 | DECE | 0.000000 | 0.000000 | -8.300000 | 0.000000 | 0.000000 | | |
|  | 0.00000000 | | 0.000000 | | | | | |
| 22 | DECE | 0.000000 | 0.000000 | 0.000000 | 0.000000 | 0.000000 | | |
|  | 0.00000000 | | 0.000000 | | REFL | | | |
| 23 | DECE | 0.000000 | 0.000000 | 0.000000 | 0.000000 | 0.000000 | | |
|  | 0.00000000 | | 0.000000 | | | | | |
| 24 | DECE | 0.000000 | 0.000000 | 8.300000 | 0.000000 | 0.000000 | | |
|  | 0.00000000 | | -1.500000 | | | | | |
| 25 | DECE | 0.000000 | 0.000000 | 0.000000 | 0.000000 | 0.000000 | | |
|  | 0.00000000 | | 1.500000 | | | | | |
| 26 | DECE | 0.000000 | 0.000000 | -8.300000 | 0.000000 | 0.000000 | | |
|  | 0.00000000 | | 0.000000 | | | | | |
| 27 | DECE | 0.000000 | 0.000000 | 4.759000 | 0.000000 | 0.000000 | | |
|  | 0.0000000 | | 1.500000 | | | | | |

TABLE II

## SURFACE DATA

| SURFACE # | CURVATURE | THICKNESS | GLASS | STOP | TYPE |
|---|---|---|---|---|---|
| 28 | 0.00000000 | 6.000000 | | | |
| 29 | 0.00000000 | 0.000000 | P/R | | |

## SPECIFICATION DATA

| | |
|---|---|
| EPD | 0.04603 |
| DIM | I |
| WL | 800.00 |

## ZOOM DATA

| | POS 1 | POS 2 | POS 3 | POS 4 | POS 5 | POS 6 |
|---|---|---|---|---|---|---|
| BDE4 | 0.000000 | 2.219200 | 4.438400 | 6.657600 | 8.876800 | 8.876800 |
| BDE9 | 0.000000 | -2.219200 | -4.438400 | -6.657600 | -8.876800 | -8.876800 |
| BDE20 | 0.000000 | -2.219200 | -4.438400 | -6.657600 | -8.876800 | -8.876800 |
| BDE25 | 0.000000 | 2.219200 | 4.438400 | 6.657600 | 8.876800 | 8.876800 |
| ADE6 | 0.000000 | 0.000000 | 0.000000 | 0.000000 | 0.000000 | 0.050000 |
| ADE7 | 0.000000 | 0.000000 | 0.000000 | 0.000000 | 0.000000 | -0.050000 |
| ADE22 | 0.000000 | 0.000000 | 0.000000 | 0.000000 | 0.000000 | 0.050000 |
| ADE23 | 0.000000 | 0.000000 | 0.000000 | 0.000000 | 0.000000 | -0.050000 |

Claims:

1.     A scanner for providing a scanning beam which is corrected for wobble and field curvature, including a rotary prismatic mirror having surfaces with a predetermined draft angle with the axis of rotation of said assembly, first means for directing a beam of finite conjugate light at the mirror, the beam being reflected in turn by each active surface of the mirror, a first mirror having optical power placed in the path of light reflected from the active surface of the prism, a second mirror having optical power placed in the path of the reflected light from the first mirror, the second mirror reflecting the beam back to the active surface of the prism, for reflection toward a surface to be scanned, the  beam being focussed at the surface to be scanned.

2.     The scanner of Claim 1, wherein the optical power of each of the first and second mirrors is provided by an aspheric surface.

FIG. 1

OUTPUT
BEAM

INCOMING
BEAM

*24*

*22*

*18*

*20*

*FIG. 2*

FIG. 3

FIG. 4

FIG. 5

OUTGOING BEAM

PHOTORECEPTOR
24

SECOND REFLECTION

AXIS OF ROTATION OF POLYGON 12

ACTIVE FACET

INCOMING BEAM

22

SECOND MIRROR

RAY 1

20

18

FIRST REFLECTION

FIRST MIRROR

5/5

0176265

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,Y | US-A-3 897 132 (L.MEEUSEN et al.) <br> * Column 2, lines 33-34; column 3, lines 12-24; figure 2 * | 1,2 | G 02 B 26/10 |
| Y | FR-A-2 517 078 (BARR & STROUD LTD.) <br> * Page 9, lines 13-19; figure 3 * | 1,2 | |
| A | GB-A-1 541 214 (UNITED KINGDON ATOMIC ENERGY AUTHORITY) <br> * Page 2, lines 87-91; page 3, lines 25-41; figure 4 * | 1,2 | |
| A | EP-A-0 014 548 (XEROX CORPORATION) <br> * Claims 1-3 * | 1,2 | |
| D,P <br> A | EP-A-0 138 400 (XEROX CORPORATION) <br> * Abstract; figure 1 * | 1 | TECHNICAL FIELDS SEARCHED (Int. Cl 4) <br><br> G 02 B 26/00 <br> H 04 N 1/00 |
| P,A | PATENTS ABSTRACTS OF JAPAN, vol. 8, no. 219 (P-306)[1656], 5th October 1984; & JP - A - 59 102 211 (DERUFUAI K.K.) 13-06-1984 <br> * Abstract * | | |

---  -/-

The present search report has been drawn up for all claims

| Place of search | Date of completion of the search | Examiner |
|---|---|---|
| THE HAGUE | 16-12-1985 | POPINEAU G.J.P. |

| DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl.4) |
|---|---|---|---|
| P,A | PATENTS ABSTRACTS OF JAPAN, vol. 8, no. 237 (P-310)[1674], 30th October 1984; & JP - A - 59 113 409 (KOPARU EREKUTORA K.K.) 30-06-1984 * Abstract * | | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 16-12-1985 | POPINEAU G.J.P. |